# EUROPÄISCHE PATENTANMELDUNG

(11) **EP 2 362 700 A2**
(43) Veröffentlichungstag der Anmeldung: **31.08.2011**
(21) Anmeldenummer: 11154111.6
(22) Anmeldetag: 11.02.2011
(51) Int. Cl.: H04W 56/00

(54) **Synchronisierung von drahtlosen TDMA Netzwerkgeräten mit Empfänger mit geringem Energiebedarf**

(30) Priorität: 25.02.2010 DE 102010002331
(71) Anmelder: SIEMENS AKTIENGESELLSCHAFT, 80333 München (DE)
(72) Erfinder: Heinrich, Andreas, 81377 München (DE)

(57) **Zusammenfassung**

Die Erfindung betrifft eine energieeffiziente Synchronisierung von Netzwerkgeräten, wobei zur drahtlosen Datenübertragung ein synchronisiertes Kommunikationsprotokoll auf Basis von zeitlichen Slots verwendet wird und wobei die Synchronisationsdaten mittels eines zusätzlichen Empfängers, der im Vergleich zur Sende- und/oder Empfangseinheit einen geringeren Energiebedarf aufweist, je Netzwerkgerät empfangen werden. Um eine energieeffiziente und gleichzeitig robuste Lösung zur Synchronisierung anzugeben, wird vorgeschlagen, dass für jedes Synchronisationssignal zumindest zwei Bits verwendet werden, wodurch die Synchronisationssignale von z.B. Interferenzen unterschieden werden können bzw. die Störanfälligkeit zumindest deutlich reduziert werden kann.

## Beschreibung

Die Erfindung betrifft ein Verfahren zur Synchronisierung von Netzwerkgeräten eines Netzwerkes, wobei zur drahtlosen Datenübertragung mittels einer Sende- und/oder Empfangseinheit je Netzwerkgerät ein synchronisiertes Kommunikationsprotokoll auf Basis von zeitlichen Slots verwendet wird, wobei Synchronisationsdaten mit zumindest einem Synchronisationssignal von zumindest einem Synchronisationsgeber gesendet werden und wobei die Synchronisationsdaten mittels eines zusätzlichen Empfängers, der im Vergleich zur Sende- und/oder Empfangseinheit einen geringeren Energiebedarf aufweist, je Netzwerkgerät empfangen werden.

Die Erfindung betrifft weiter ein Netzwerkgerät gemäß dem Oberbegriff des Anspruchs 14 sowie einen Synchronisationsgeber, mit dem ein gattungsgemäßes Verfahren durchgeführt werden kann.

Ein derartiges Verfahren kommt insbesondere auf dem Gebiet der industriellen Automatisierungstechnik zum Einsatz. Die Maschine-zu-Maschine-Kommunikation bildet einen zentralen Teil rechnergestützter Automatisierungssysteme. Drahtlose Kommunikationssysteme bieten gegenüber drahtgebundenen Systemen insbesondere Vorteile hinsichtlich der Flexibilität. Diese Eigenschaft ist auch im industriellen Umfeld zunehmend gefragt, um auf geänderte Bedingungen möglichst schnell und kostengünstig reagieren zu können. Insbesondere die Installation einer Infrastruktur (Kabel, Basisstationen, Stromnetz) ist oftmals nicht kostengünstig oder gar nicht möglich. Zudem muss eine Infrastruktur vor der Installation geplant werden und schränkt den Einsatz des Kommunikationssystems dabei üblicherweise stark auf das geplante Anwendungsszenario ein. Eine Änderung in der Anwendung erfordert daher oftmals auch die Änderung der Infrastruktur (z.B. bei einer räumlichen Verlegung/Veränderung einer Fertigungsstraße) und verursacht damit hohe Kosten.

Besonderes Optimierungspotential bei der Kostenreduzierung bieten batteriebetriebene drahtlose Mesh-Netze (auch als Sensornetze bezeichnet), die keinerlei Infrastruktur für die Kommunikation oder die Stromversorgung erfordern. Der Einsatz derartiger Netze bietet neben Einsparungen in bestehenden Systemen auch das Potential zur Erschließung neuer Anwendungsgebiete, die mit bisherigen Systemen aufgrund zu geringer Flexibilität oder der erforderlichen Infrastruktur nicht angemessen oder gar nicht abgedeckt werden können. Dazu müssen die Netzelemente allerdings möglichst günstig in der Anschaffung sein (CAPEX, "CAPital EXpenditure") und dürfen gleichzeitig nur geringe Betriebs-/Wartungskosten (OPEX, "OPerational EXpenditure") verursachen. Dies kann durch möglichst optimale Verwendung der Funkressourcen bei gleichzeitig möglichst geringem Energieverbrauch sowie günstiger Hardware der Netzelemente erzielt werden.

Industrielle Anwendungen können Daten, z.B. in einem Regelprozess, oftmals nur sinnvoll verarbeiten, wenn sie einen gewissen Grad an Vorhersagbarkeit (Determinismus) aufweisen. Selbst wenn eine Anwendung an die Verzögerungsverhältnisse anpassbar ist, bieten geringe und deterministische Verzögerungen üblicherweise Vorteile bei der Automatisierung, da Reaktionszeiten und Regelschleifen besser optimiert werden können. Die bisher eingesetzten drahtgebundenen Systeme wie z.B. Profibus und Profinet bieten daher spezielle Verfahren zur Sicherstellung eines möglichst hohen Grads an Determinismus für die Datenübertragung.

Idealerweise sollten auch drahtlose Systeme einen möglichst hohen Grad an Determinismus bei der Übertragung bieten. Im Gegensatz zu drahtgebundenen Systemen ist der Übertragungskanal bei drahtloser Übertragung jedoch deutlich störungsanfälliger und kann somit vermehrt Übertragungsprobleme verursachen. Um eine hohe oder sogar einem drahtgebundenen System ähnliche Übertragungsqualität zu erzielen, muss ein drahtloses System daher ausreichend robust gegen Störeinflüsse konstruiert werden. Dies gilt insbesondere für industrielle Umgebungen, die gewöhnlich deutlich schwierigere Übertragungsbedingungen als Anwendungen der herkömmlichen Telekommunikation aufweisen. Für Anwendungsgebiete in industrieller Umgebung besteht daher ein wesentliches Optimierungspotential für drahtlose Systeme darin, die Übertragung möglichst deterministisch und gleichzeitig robust zu realisieren.

Ein hoher Grad an Determinismus kann mittels Übertragungsverfahren wie dem "Time Division Multiple Access" (TDMA) realisiert werden, bei denen der Kanal in Zeitschlitze (Slots) unterteilt wird, die jeweils einem Knotenpaar (Sender und Empfänger) zugewiesen werden. Die Zeitschlitze werden dabei so zugewiesen, dass keine bzw. möglichst wenig Kollisionen bei der Kommunikation entstehen und somit sehr wenig Energie für wiederholte Übertragungen erforderlich ist. Insbesondere bei hohen Verkehrslasten macht sich diese Eigenschaft zunehmend positiv bemerkbar. Zudem kann durch die geringe Anzahl an Kollisionen die Kapazität des Kanals optimal genutzt werden. Durch die Reservierung von Slots sind den Knoten (Netzwerkgeräten) zudem die Zeiten bekannt, zu denen sie aktiv sein müssen. Daher können sehr effiziente Energiesparstrategien implementiert werden, bei denen ein Knoten in einen Schlaf-Modus wechselt, wenn ein Slot nicht für ihn reserviert ist. Damit ist während eines Slots nur das Knotenpaar aktiv, für das der Slot reserviert ist. Alle anderen Knoten können während dieser Zeit schlafen.

Voraussetzung für die Verwendung eines TDMA-basierten Medienzugriffs ist eine hinreichend genaue Synchronisation der Knoten untereinander. Nur wenn die Synchronisation eine zuvor eingeplante Toleranz nicht überschreitet, kann eine Störung zwischen den Slots kontrollierbar ausgeschlossen werden. Allgemein gilt, dass eine höhere Synchronisationsgenauigkeit zu geringeren Toleranzen und somit zu geringerem Energieverbrauch führt.

Bei der Synchronisation von TDMA-basierten drahtlosen Sensornetzen können zwei Prinzipien unterschieden werden. Das eine ist eine In-Band-Synchronisation, bei der Synchronisationsdaten über den gleichen Kanal gesendet werden, in dem auch die Nutzdaten übertragen werden. In dem vorliegenden Kontext bedeutet dies, dass die gleiche Transceiver-Einheit verwendet wird, d.h. es wird hier auch von In-Band-Synchronisation gesprochen, wenn die Nutzdaten und Synchronisationsdaten zwar auf unterschiedlichen Kanälen (Zeit-Slots), aber mit derselben Transceiver-Einheit übertragen werden.

Der Protocol-Stack des Netzknotens sorgt bei diesem Ansatz dafür, dass die Managementpakete für die Synchronisation von (Nutz-) Daten unterschieden und an die richtigen Verarbeitungseinheiten im Knoten geleitet werden. Durch das Senden und Verarbeiten von In-Band-Managementdaten entsteht ein zusätzlicher Overhead. Da die gleiche Transceivereinheit verwendet wird, ist der Energiebedarf zur Übertragung eines Bits für die Synchronisation gleich der Übertragung eines Datenbits (bzw. unter Umständen nicht gleich, jedoch immer noch in der gleichen Größenordnung).

Moderne Transceiver sind auf die Übertragung von Datenströmen optimiert und erfordern gewöhnlich eine hochwertige Modulation sowie eine vergleichsweise komplexe Vor- und Nachbearbeitung der Signale, um praxistaugliche Übertragungsraten und eine gute Robustheit zu erzielen. Die hierfür erforderliche Hardware benötigt eine Leistung in der Größenordnung von mehreren Milliwatt. In der Praxis übliche Chips - wie z.B. der CC2420 von Texas Instruments - haben beispielsweise eine Leistungsaufnahme von ca. 60 mW. Sollen sehr große Lebenszeiten mit batteriebetriebenen Netzelementen realisiert werden, muss daher die aktive Zeit (Duty Cycle: Zeit, in der der Transceiver aktiviert ist und Leistung aufnimmt) soweit reduziert werden, dass die mittlere Leistungsaufnahme so gering ist, dass die anvisierte Lebensdauer bei gegebener Batteriekapazität erreicht wird. Es entsteht ein direkter Zusammenhang zwischen der Leistungsaufnahme und der Anzahl der Bits, die ausgetauscht werden können: Je größer die Leistungsaufnahme, desto weniger Bits können übertragen werden. Mit den genannten Chips können in der Praxis somit gewöhnlich nur wenige Management- oder Nutzdaten pro Tag gesendet werden.

Der WirelessHART-Standard beispielsweise definiert eine In-Band-Synchronisation. Um den Overhead zu minimieren, sind die Synchronisationsinformationen in die Nutzdaten-Pakete eingebettet. Bei sehr großen Perioden für die Nutzdaten müssen allerdings regelmäßig separate Pakete für die Synchronisation ("Keep Alive") generiert werden, um das Driften der Uhren auszugleichen. Bei der für WirelessHART definierten Hardware liegen die Synchronisationsperioden in der Größenordnung von 0,5-1 Minute. Wird allgemein verfügbare Hardware mit höherem Drift verwendet, ist sogar eine deutlich häufigere (Re-) Synchronisation erforderlich. Für Systeme mit sehr großer Periode für die Datenübertragung ergibt sich dadurch ein vergleichsweise hoher Energiebedarf für die Synchronisierung des Netzes.

Das zweite Prinzip ist eine Out-Band-Synchronisierung, wie sie aus RT-Link, einem TDMA-basierten System bekannt ist (A. Rowe, R. Mangharam und R. Rajkumar, "RT-link: A timesynchronized link protocol for energy-constrained multi-hop wireless networks", in "Sensor and Ad Hoc Communications and Networks", Third Annual IEEE Communications Society Conference on Sensor, Mesh and Ad Hoc Communications and Networks, Vol. 2, S. 404-411, 2006). Die zu synchronisierenden Knoten (Netzwerkgeräte) verfügen dazu über zusätzliche (Low-Power-) Receiver, die Synchronisationsimpulse empfangen können. Beim Empfang eines Impulses wird der Hauptprozessor über einen Pin informiert. Daraufhin wird die lokale Uhr des Knotens initialisiert und eine slot-basierte Kommunikationsphase eingeleitet. Entscheidend für eine erfolgreiche Separierung der Slots ist, dass der Synchronisationsdrift durch entsprechende Schutzzeiten bis zum letzten Slot ausgeglichen werden kann. Allgemein ist die Anzahl der möglichen Slots damit durch die Schutzzeiten bzw. den Drift begrenzt.

Die Zuverlässigkeit des Systems wird entscheidend durch die erfolgreiche Übertragung der Synchronisationsimpulse zum Initiieren der Kommunikationsphase bestimmt. Wird der Impuls z.B. durch Interferenz nicht detektiert - wobei insbesondere in industriellen Umgebungen mit hohen Interferenzanteilen zu rechnen ist -, wird der anschließende Frame nicht bearbeitet. Selbst wenn das System ohne Impuls den Frame bearbeiten könnte, dürfte ein Cycle nur so lang sein, dass das System zu diesem Zeitpunkt noch nicht aus der Synchronisation geraten ist. Mit zunehmend langen Perioden kann dies nur sehr schwierig oder gar nicht sichergestellt werden. Zudem ist bei sehr langen Perioden der Ausfall eines Frames zunehmend problematisch, da die gepufferten Daten nicht weitergeleitet werden können und somit große Verzögerungen generiert werden, wenn sie erst im nächsten Frame gesendet werden können. Bei RT-Link kann also ein Frame nur dann bearbeitet werden, wenn der Synchronisationsimpuls erfolgreich übertragen wurde.

Bei der Out-Band-Synchronisierung werden also Synchronisationsdaten über einen separaten Kanal übertragen. In dem vorliegenden Kontext bedeutet dies, dass eine separate Transceiver-Einheit bzw. Receiver-Einheit verwendet wird. Die Übertragung der Synchronisationsdaten erfolgt parallel zur Datenübertragung und hat keinen Einfluss auf die verfügbare Kanalkapazität für Nutzdaten. Der Energiebedarf für die Übertragung des Synchronisationsbits wird dabei im Wesentlichen durch den separaten Transceiver bzw. Receiver sowie die dazugehörige Verarbeitungshardware bestimmt. Bei Verwendung von Low-Power-Receivern zum Empfang der Synchronisationsinformationen in einem Knoten kann daher eine sehr energieeffiziente Synchronisation und somit hohe Lebenszeit erzielt werden. Dies gilt insbesondere für den Fall kostengünstiger Hardwarekomponenten. Da derartige Receiver üblicherweise einen vergleichsweise hohen Uhren-Drift aufweisen, erfordern sie eine im Vergleich zur Datenperiode deutlich kürzere Synchronisierungsperiode und würden bei Verwendung von In-Band-Synchronisation somit mehr Energie für die Synchronisation als für die Datenübertragung erfordern.

Eine Signalisierung über einen separaten (Out-Band-) Kanal wurde in Sensornetzen ursprünglich für den energieeffizienten Medienzugriff in asynchronen Netzen verwendet. Wenn ein Knoten mit einem anderen Knoten kommunizieren möchte, sendet er zunächst ein Aufwecksignal über den Out-Band-Kanal, das von den entsprechenden Receivern in den anderen Knoten (auch als Wake-Up-Receiver bezeichnet) empfangen wird. Der Wake-Up-Receiver generiert daraufhin einen Aufweckimpuls und der Knoten geht mit dem Haupt-Receiver in Empfangsbereitschaft. Durch diesen Ansatz wird das energieintensive Idle-Listening des Haupt-Receivers durch ein energieeffizientes Idle-Listening des Wake-Up-Receivers substituiert.

Um den Energiebedarf in Low-Power-Receivern möglichst gering zu halten, wird üblicherweise ein sehr einfacher Aufbau mit nur wenig aktiven elektronischen Bauteilen verwendet. Dadurch können in dem Signal nur sehr wenige Daten codiert werden. Bei derzeit üblichen Realisierungen steht lediglich nur ein Bit (Zustände: "0" und "1") zur Verfügung. Dies führt dazu, dass z.B. in asynchronen Netzen alle Knoten mitaufgeweckt werden.

Derzeit wird an Low-Power-Receivern gearbeitet, die die Übertragung mehrerer Bits bzw. höherwertiger Symbole (mehr als zwei Zustände) ermöglichen. Diese werden in Netzen mit asynchronem Kommunikationsprotokoll dazu genutzt, nur bestimmte Knoten in dem Netz für den Empfang von Nutzdaten aufzuwecken, s. hierzu z.B. US 7 209 771 B2.

Der Erfindung liegt die Aufgabe zugrunde, eine energieeffiziente und gleichzeitig robuste Lösung zur Synchronisierung von Netzen mit einem synchronisierten Kommunikationsprotokoll anzugeben.

Diese Aufgabe wird bei einem Verfahren der eingangs genannten Art dadurch gelöst, dass für jedes Synchronisationssignal zumindest zwei Bits verwendet werden.

Die Aufgabe wird weiter durch ein Netzwerkgerät und einen Synchronisationsgeber mit den in Anspruch 14 bzw. Anspruch 19 angegebenen Merkmalen gelöst.

Die erfindungsgemäße Lösung verwendet Low-Power-Sender bzw. -Empfänger mit der Möglichkeit zur Übertragung von mehr Daten als nur ein Bit - d.h. einen Impuls - für die Synchronisation eines Netzwerkes mit einem synchronisierten Kommunikationsprotokoll auf Basis zeitlicher Slots. Im Unterschied zum beschriebenen Stand der Technik werden die Daten also nicht zur Unterstützung asynchroner Kommunikationsprotokolle, beispielsweise zum gezielten Aufwecken bestimmter Kommunikationspartner, verwendet, sondern zur Unterstützung synchronisierter Kommunikationsprotokolle, wodurch eine im Vergleich zum bisher bekannten System zur Out-Band-Synchronisierung robustere Erkennung der Synchronisationsinformationen im Umfeld anderer Störsignale ermöglicht wird.

Die hierfür von den Netzwerkgeräten (Knoten) benötigten Mittel zur Auswertung von mittels des zusätzlichen Empfängers (dem Low-Power-Receiver) empfangenen Synchronisationsdaten, die bei Durchführung eines erfindungsgemäßen Verfahrens von einem Synchronisationsgeber gesendet werden, können dabei z.B. durch eine im Hauptprozessor ablaufende Auswerteroutine realisiert sein. Dies erlaubt auch komplexere Auswertungen, ohne dass der hohe Energiebedarf einer In-Band-Synchronisierung erforderlich ist, da der Energiebedarf des Prozessors um Größenordnungen geringer ist als die Übertragung über den Haupt-Transceiver. Durch die erfindungsgemäße Lösung werden die Vorteile einer In-Band-Synchronisation (Verwendung von Synchronisationsdaten mit mehr als einem Bit) mit denen einer Out-Band-Synchronisation (energieeffiziente Signalübertragung) miteinander kombiniert.

Mit großem Vorteil können also die aus mehr als einem Bit bestehenden Synchronisationssignale von Interferenzen eindeutig unterschieden werden, so dass keine Synchronisierung auf fehlerhaft als Synchronisierungssignal (-impuls) erkannte Interferenz erfolgt bzw. ein Synchronisationsimpuls nicht durch Interferenz nicht detektiert werden kann. Somit eignet sich das erfindungsgemäße Verfahren zusammen mit dem erfindungsgemäßen Netzwerkgerät und Synchronisationsgeber insbesondere für einen Einsatz in industriellen Umgebungen, bei denen oft mit hohen Interferenzanteilen zu rechnen ist. Eine höhere Robustheit bei der Synchronisation ist eine Voraussetzung, um derartige Systeme in schwierigen Umgebungen - wie bei der industriellen Automatisierung üblich - sinnvoll zu betreiben. Eine Out-Band-Synchronisation mit einem einfachen Synchronisationsimpuls, wie aus dem Stand der Technik bekannt, wäre hier kaum realisierbar, da die Wahrscheinlichkeit für die Störung einfacher Synchronisationsimpulse zu hoch wäre und zudem andere Störsignale das System in einen undefinierbaren Zustand bringen könnten. Die erfindungsgemäße Lösung löst dieses Problem bzw. reduziert die Störanfälligkeit zumindest deutlich.

In einer vorteilhaften Form der Ausgestaltung wird zumindest ein Netzwerkgerät als Synchronisationsgeber verwendet, wobei die Synchronisationsdaten mittels eines zusätzlichen Senders, der im Vergleich zur Sende- und/oder Empfangseinheit einen geringeren Energiebedarf aufweist, gesendet werden. Durch die Übernahme der Funktion eines Synchronisationsgebers durch ein oder mehrere Netzwerkgeräte (Knoten) wird kein separater Synchronisationsgeber im Netz benötigt.

Vorteilhafterweise ist dabei im Netzwerkgerät der zusätzliche Sender mit dem zusätzlichen Empfänger in einer zweiten Sende-und Empfangseinheit integriert. Neben dem Haupt-Transceiver für die (Nutz-) Datenübertragung enthält das Netzwerkgerät also einen zusätzlichen Low-Power-Transceiver zum Senden und Empfangen der Synchronisationsdaten.

In einer weiteren vorteilhaften Ausführungsform sendet zumindest ein Synchronisationsgeber Synchronisationsdaten, anhand derer dieser identifiziert werden kann. Dies ist insbesondere sinnvoll, wenn mehrere Synchronisationsgeber im Netzwerk verwendet werden, deren Sendebereiche sich zumindest teilweise überschneiden. Hier kann es passieren, dass Netzwerkgeräte Synchronisationsdaten von mehr als einem Synchronisationsgeber empfangen, wobei die Synchronisationsquelle der jeweiligen Synchronisationsdaten durch die Auswertemittel der Netzwerkgeräte identifiziert werden kann.

In einer weiteren vorteilhaften Ausführungsform wird dabei zumindest einem Netzwerkgerät ein Synchronisationsgeber zugeordnet, der von dem Netzwerkgerät anhand seiner Synchronisationsdaten identifiziert wird, wobei nur die Synchronisationssignale des zugeordneten Synchronisationsgebers von dem Netzwerkgerät zur Synchronisierung verwendet werden. Die Synchronisationsdaten sind also so ausgelegt, dass die Knoten eine Unterscheidung der Signale durchführen können und nur die für sie bestimmten Synchronisationsinformationen verwenden, so dass zumindest bestimmte Knoten nur zuvor bestimmte Synchronisationsquellen zur Synchronisierung verwenden.

In einer weiteren vorteilhaften Ausführungsform werden die Synchronisationsdaten von einem zentralen Synchronisationsgeber gesendet. Bei dieser für überschaubare Netze, bei denen alle Knoten im Sendebereich des zentralen Synchronisationsgebers liegen, sinnvollen Ausgestaltung kann somit auch auf zusätzliche Synchronisationsdaten zur Identifizierung der Synchronisationsquelle verzichtet werden.

In einer weiteren vorteilhaften Ausführungsform werden die Synchronisationsdaten mit einer Codierungsredundanz ausgelegt. Auf diese Weise kann erreicht werden, dass bei kleinen Übertragungsfehlern zumindest das Synchronisationssignal rekonstruiert werden kann, wodurch die Robustheit der Synchronisierung weiter erhöht wird.

In einer weiteren vorteilhaften Ausführungsform unterstützt das Kommunikationsprotokoll eine rahmenbasierte Kommunikation. Hierdurch können insbesondere in der Automatisierungstechnik verbreitete Protokolle verwendet werden. Eine mögliche Realisierung ist ein weitgehend standard-konformes WirelessHART-System, bei dem die In-Band-Synchronisation durch eine Low-Power-Out-Band-Synchronisation ersetzt wird. Eine Erweiterung bestehender Systeme wie beispielsweise WirelessHART ermöglicht Produkte, die einen gewissen Grad an Standard-Kompatibilität bieten (z.B. für die Datenkommunikation) und in der Entwicklung und Produktion weitgehend identisch sind, jedoch in bestimmten Einsatzgebieten - wie z.B. bei geringem Datenaufkommen in Monitoring-Anwendungen - deutlich höhere Lebenszeiten des Systems ermöglichen.

In einer weiteren vorteilhaften Ausführungsform unterstützt dabei das Kommunikationsprotokoll eine parallele Verwendung unterschiedlicher Rahmengrößen. Auch diese Möglichkeit ist z.B. bei einem weitgehend standard-konformen WirelessHART gegeben, das ein Scheduling mit unterschiedlichen Frame-Größen unterstützt.

In einer weiteren vorteilhaften Ausführungsform werden dabei die zu verwendenden Rahmen bei der Datenübertragung mit den Synchronisationsdaten gesteuert. Hierdurch wäre z.B. das Ein-und Ausschalten, wie z.B. von WirelessHART unterstützt, realisierbar und könnte Management-Overhead über den Haupt-Transceiver vermeiden.

In einer weiteren vorteilhaften Ausführungsform verwaltet das Kommunikationsprotokoll zur Bestimmung des Starts eines Rahmens eine Slotzahl, mit der zusammen mit der Rahmengröße der aktuelle Slot in einem Rahmen bestimmt werden kann. Auch dieses Merkmal ist in WirelessHART gegeben, wobei die Slotzahl der "Absolute Slot Number (ASN)" entspricht.

In einer weiteren vorteilhaften Ausführungsform werden dabei mit den Synchronisationsdaten Informationen gesendet, anhand derer die Slotzahl generiert werden kann. Im einfachsten Fall wird hierzu (zumindest) ein Teil der Slotzahl - z.B. die unteren Bits der ASN - übertragen.

In einer weiteren vorteilhaften Ausführungsform wird dabei in zumindest einem Netzwerkgerät die Slotzahl generiert und die Slotzahl in einem Slotzahl-Zähler mitgezählt. Auf diese Weise kann ein Knoten die Slotzahl empfangen bzw. erzeugen und beispielsweise einen ASN-Zähler im Knoten mitlaufen lassen, der entsprechende Aufwachsignale für den Haupt-Transceiver zu den aktiven Slots erzeugt.

In einer weiteren vorteilhaften Ausführungsform werden die Synchronisationsdaten häufiger als aufgrund einer berechneten Schutzzeit zum Ausgleich eines Synchronisationsdrifts erforderlich gesendet. Durch das häufige Senden entsteht eine Redundanz, die Daten lassen jedoch eine exakte Generierung des Synchronisationssignals zu, wodurch die Robustheit des erfindungsgemäßen Verfahrens noch weiter erhöht wird. Führt der Knoten beispielsweise eine interne Zählung der ASN durch, wird diese immer dann abgeglichen, wenn Synchronisationsdaten erfolgreich empfangen wurden. Durch die ASN in den Daten kann der Knoten einfach die absolute Slot-Position bestimmen.

In einer besonders vorteilhaften Form der Ausgestaltung sind bei erfindungsgemäßen Netzwerkgeräten die Mittel zur Auswertung zumindest teilweise als Auswertehardware ausgeführt, die im Vergleich zum Hauptprozessor einen geringeren Energiebedarf aufweist. Dies kann z.B. durch eine energieeffiziente hardware-basierte Logik aus einfachen Registern und Vergleichsoperationen realisiert sein. Bei einfacher Codierung können somit zumindest große Teile der Auswertung in energiesparende Hardware ausgelagert werden, während komplexere Auswertungen vom Hauptprozessor wahrgenommen werden. Durch die zumindest teilweise Implementierung von einfacher Auswertungshardware wird eine weitere Energieoptimierung erzielt.

Bei Verwendung eines (separaten) Synchronisationsgebers gemäß der Erfindung ist es nicht unbedingt erforderlich, dass dieser über einen Low-Power-Sender verfügt, falls er beispielsweise über eine Stromzuführung verfügt. Dies gilt natürlich genau genommen auch für Netzwerkgeräte, allerdings zielt das erfindungsgemäße Verfahren speziell auf eine energieoptimierte und dennoch robuste Synchronisierung, selbst wenn manche Knoten im Netzwerk hierauf nicht angewiesen sind.

In einer vorteilhaften Form der Ausgestaltung weist der Synchronisationsgeber auch einen Empfänger zum Empfang der Synchronisationsdaten auf. Hierdurch können z.B. Synchronisationsdaten von einem anderen Synchronisationsgeber empfangen und gewissermaßen zur Reichweitenvergrößerung weitergereicht (gesendet) werden.

In einer weiteren vorteilhaften Ausführungsform ist dabei der Sender mit dem Empfänger in einer Sende- und Empfangseinheit integriert.

In einer weiteren vorteilhaften Ausführungsform weist der Synchronisationsgeber eine zusätzliche Sende- und/oder Empfangseinheit zur drahtlosen Datenübertragung unter Verwendung eines synchronisierten Kommunikationsprotokolls auf Basis von zeitlichen Slots auf. Hierdurch kann er auch eigene Nutzdaten senden oder Nutzdaten von Knoten weiterreichen.

Im Falle der Realisierung der Erfindung als ein weitgehend standard-konformes WirelessHART-System erhält man gewissermaßen ein Ultra-Low-Power WirelessHART-basiertes System mit robuster Out-Band-Synchronisation. Wird eine spezielle energieeffiziente Auswertelogik für die Netzwerkgeräte verwendet, könnte man auch von einem Extreme-Ultra-Low-Power-WirelessHART-System sprechen. Dabei kann in allen Fällen die Robustheit des Synchronisationsverfahrens durch spezielle Ausgestaltungen mit z.B. zeitlicher Redundanz oder Codierungsredundanz weiter erhöht werden.

Zusammenfassend betrifft die Erfindung eine energieeffiziente Synchronisierung von Netzwerkgeräten, wobei zur drahtlosen Datenübertragung ein synchronisiertes Kommunikationsprotokoll auf Basis von zeitlichen Slots verwendet wird und wobei die Synchronisationsdaten mittels eines zusätzlichen Empfängers, der im Vergleich zur Sende- und/oder Empfangseinheit einen geringeren Energiebedarf aufweist, je Netzwerkgerät empfangen werden. Um eine energieeffiziente und gleichzeitig robuste Lösung zur Synchronisierung anzugeben, wird vorgeschlagen, dass für jedes Synchronisationssignal zumindest zwei Bits verwendet werden, wodurch die Synchronisationssignale von z.B. Interferenzen unterschieden werden können bzw. die Störanfälligkeit zumindest deutlich reduziert werden kann.

## Patentansprüche

1. Verfahren zur Synchronisierung von Netzwerkgeräten eines Netzwerkes, wobei zur drahtlosen Datenübertragung mittels einer Sende- und/oder Empfangseinheit je Netzwerkgerät ein synchronisiertes Kommunikationsprotokoll auf Basis von zeitlichen Slots verwendet wird, wobei Synchronisationsdaten mit zumindest einem Synchronisationssignal von zumindest einem Synchronisationsgeber gesendet werden und wobei die Synchronisationsdaten mittels eines zusätzlichen Empfängers, der im Vergleich zur Sende- und/oder Empfangseinheit einen geringeren Energiebedarf aufweist, je Netzwerkgerät empfangen werden, **dadurch gekennzeichnet, dass** für jedes Synchronisationssignal zumindest zwei Bits verwendet werden.

2. Verfahren nach Anspruch 1,
wobei zumindest ein Netzwerkgerät als Synchronisationsgeber verwendet wird, wobei die Synchronisationsdaten mittels eines zusätzlichen Senders, der im Vergleich zur Sende- und/oder Empfangseinheit einen geringeren Energiebedarf aufweist, gesendet werden.

3. Verfahren nach Anspruch 1 oder 2,
wobei zumindest ein Synchronisationsgeber Synchronisationsdaten sendet, anhand derer dieser identifiziert werden kann.

4. Verfahren nach Anspruch 3,
wobei zumindest einem Netzwerkgerät ein Synchronisationsgeber zugeordnet wird, der von dem Netzwerkgerät anhand seiner Synchronisationsdaten identifiziert wird, wobei nur die Synchronisationssignale des zugeordneten Synchronisationsgebers von dem Netzwerkgerät zur Synchronisierung verwendet werden.

5. Verfahren nach einem der vorhergehenden Ansprüche,
wobei die Synchronisationsdaten von einem zentralen Synchronisationsgeber gesendet werden.

6. Verfahren nach einem der vorhergehenden Ansprüche,
wobei die Synchronisationsdaten mit einer Codierungsredundanz ausgelegt werden.

7. Verfahren nach einem der vorhergehenden Ansprüche,
wobei das Kommunikationsprotokoll eine rahmenbasierte Kommunikation unterstützt.

8. Verfahren nach Anspruch 7,
wobei das Kommunikationsprotokoll eine parallele Verwendung unterschiedlicher Rahmengrößen unterstützt.

9. Verfahren nach Anspruch 7 oder 8,
wobei die zu verwendenden Rahmen bei der Datenübertragung mit den Synchronisationsdaten gesteuert werden.

10. Verfahren nach einem der Ansprüche 7 bis 9,
wobei das Kommunikationsprotokoll zur Bestimmung des Starts eines Rahmens eine Slotzahl verwaltet, mit der zusammen mit der Rahmengröße der aktuelle Slot in einem Rahmen bestimmt werden kann.

11. Verfahren nach Anspruch 10,
wobei mit den Synchronisationsdaten Informationen gesendet werden, anhand derer die Slotzahl generiert werden kann.

12. Verfahren nach Anspruch 11,
wobei in zumindest einem Netzwerkgerät die Slotzahl generiert wird und wobei die Slotzahl in einem Slotzahl-Zähler mitgezählt wird.

13. Verfahren nach einem der vorhergehenden Ansprüche,
wobei die Synchronisationsdaten häufiger als aufgrund einer berechneten Schutzzeit zum Ausgleich eines Synchronisationsdrifts erforderlich gesendet werden.

14. Netzwerkgerät mit zumindest einem Hauptprozessor, mit einer lokalen Uhr, mit einer Sende- und/oder Empfangseinheit zur drahtlosen Datenübertragung unter Verwendung eines synchronisierten Kommunikationsprotokolls auf Basis von zeitlichen Slots sowie mit einem zusätzlichen Empfänger, der im Vergleich zur Sende- und/oder Empfangseinheit einen geringeren Energiebedarf aufweist,
**gekennzeichnet durch** Mittel zur Auswertung von mittels des zusätzlichen Empfängers empfangenen Synchronisationsdaten, die bei Durchführung eines Verfahrens nach einem der Ansprüche 1 bis 13 gesendet werden.

15. Netzwerkgerät nach Anspruch 14
mit einem zusätzlichen Sender, der im Vergleich zur Sende-und/oder Empfangseinheit einen geringeren Energiebedarf aufweist, zum Senden der Synchronisationsdaten.

16. Netzwerkgerät nach Anspruch 15,
wobei der zusätzliche Sender mit dem zusätzlichen Empfänger in einer zweiten Sende- und Empfangseinheit integriert ist.

17. Netzwerkgerät nach einem der Ansprüche 14 bis 16,
wobei die Mittel zur Auswertung einen Slotzahl-Zähler aufweisen.

18. Netzwerkgerät nach einem der Ansprüche 14 bis 17,
wobei die Mittel zur Auswertung zumindest teilweise als Auswertehardware, die im Vergleich zum Hauptprozessor einen geringeren Energiebedarf aufweist, ausgeführt sind.

19. Synchronisationsgeber mit zumindest einem Sender zum Senden von Synchronisationsdaten, die bei Durchführung eines Verfahrens nach einem der Ansprüche 1 bis 13 gesendet werden.

20. Synchronisationsgeber nach Anspruch 19
mit einem Empfänger zum Empfang der Synchronisationsdaten.

21. Synchronisationsgeber nach Anspruch 20,
wobei der Sender mit dem Empfänger in einer Sende- und Empfangseinheit integriert ist.

22. Synchronisationsgeber nach einem der Ansprüche 19 bis 21 mit einer zusätzlichen Sende- und/oder Empfangseinheit zur drahtlosen Datenübertragung unter Verwendung eines synchronisierten Kommunikationsprotokolls auf Basis von zeitlichen Slots.
